# EUROPEAN PATENT APPLICATION

(11) **EP 4 729 450 A1**
(43) Date of publication of application: **22.04.2026**
(21) Application number: 25207445.5
(22) Date of filing: 08.10.2025
(51) Int. Cl.: B65H 1/04, B65H 1/14, B65H 7/02, B65H 29/50, B65H 31/02

(54) **DOCUMENT FEEDING DEVICE AND IMAGE SCANNING APPARATUS**

(30) Priority: 15.10.2024 JP 2024179721
(71) Applicant: KYOCERA Document Solutions Inc., Osaka-shi, Osaka 540-8585 (JP)
(72) Inventor: KANDA, Mutsuki, Osaka, 540-8585, (JP)
(74) Representative: Winter, Brandl - Partnerschaft mbB

(57) **Abstract**

A controller (51) controls a first lifting device (22) and thereby changes a height position of the feeding tray (11), and controls a second lifting device (23) and thereby changes a height position of an ejection port (15) correspondingly to a sheet amount on an output tray (12). If an output lift upperlimit sensor (41) detects that the ejection port reaches an upperlimit height position, the controller temporarily stops document sheet transportation. When the controller tries to lift the ejection port to a height position corresponding to the sheet amount, if a height position of the ejection port does not become the height position corresponding to the sheet amount and the output lift upperlimit sensor does not detect that the ejection port reaches the upperlimit height position even though the second lifting device operates for predetermined time, then the controller temporarily stops document sheet transportation until document sheets on the output tray are removed.

## Description

### BACKGROUND

### 1. FIELD OF THE PRESENT INVENTION

The present invention relates to a document feeding device and an image scanning apparatus.

### 2. DESCRIPTION OF THE RELATED ART

A document feeding device includes a liftable feeding tray and a sheet output tray, and transports a document sheet along a transportation path from the feeding tray to the sheet output tray through an ejection port. In the document feeding device, an ejection port as an end of the transportation path is lifted and lowered correspondingly to a thickness of a document sheet bunch on the sheet output tray.

In such a document feeding device as mentioned, the feeding tray is lifted and lowered and the ejection port is lifted and lowered, and therefore, installed is a contact sensor that detects that the ejection port contacts with the feeding tray. Further, in order to restrain a trouble that occurs due to the contact of the ejection port with the feeding tray, when the contact sensor detects that the ejection port contacts with the feeding tray, the document feeding device stops due to error and outputs a service call or the like.

However, since the contact sensor is installed and the document feeding device stops when the contact is detected, a cost of the document feeding device becomes high due to the contact sensor and it is inconvenient because the document feeding device stops and can not continuously perform the transportation operation.

### SUMMARY

A document feeding device according to the present invention includes a feeding tray on which a document sheet is put, an output tray for the document sheet, a transportation device, an ejection port, a first lifting device, a second lifting device, an output lift upperlimit sensor, an output-tray sheet amount sensor, and a controller. The transportation device is configured to transport the document sheet along a transportation path from the feeding tray to the output tray. The ejection port is configured to output at an end of the transportation path the document sheet to the output tray. The first lifting device is configured to lift and lower the feeding tray. The second lifting device is configured to lift and lower the ejection port. The output lift upperlimit sensor is configured to detect that the ejection port reaches a fixed upperlimit height position. The output-tray sheet amount sensor is configured to detect a sheet amount of document sheets on the output tray. The controller is configured to control the first lifting device and thereby change a height position of the feeding tray, and control the second lifting device and thereby change a height position of the ejection port correspondingly to the sheet amount detected by the output-tray sheet amount sensor. Further, (a) if the output lift upperlimit sensor detects that the ejection port reaches the upperlimit height position, the controller temporarily stops document sheet transportation performed by the transportation device until document sheets on the output tray are removed, and (b) when the controller tries to lift the ejection port using the second lifting device to a height position corresponding to the sheet amount, if a height position of the ejection port does not become the height position corresponding to the sheet amount and the output lift upperlimit sensor does not detect that the ejection port reaches the upperlimit height position even though the controller causes the second lifting device to operate for predetermined time, then the controller temporarily stops document sheet transportation performed by the transportation device until document sheets on the output tray are removed.

An image scanning apparatus according to the present invention includes the aforementioned document feeding device, and an image sensor that scans an image of the document sheet at a predetermined position in the transportation path.

These and other objects, features and advantages of the present invention will become more apparent upon reading of the following detailed description along with the accompanied drawings.

### BRIEF DESCRIPTION OF THE DRAWINGS

Fig. 1 shows a side view an internal configuration of an image scanning apparatus in the present invention;
Fig. 2 shows a diagram that explains a sensor installed in a document feeding device 4 shown in Fig. 1;
Fig. 3 shows a block diagram that indicates an electronic configuration of the document feeding device 4 shown in Fig. 1;
Fig. 4 shows a diagram that explains lifting of the ejection port 15 when there is a small amount of document sheets on the feeding tray 11; and
Fig. 5 shows a diagram that explains lifting of the ejection port 15 when there is a large amount of document sheets on the feeding tray 11.

### DETAILED DESCRIPTION

Hereinafter, an embodiment according to an aspect of the present invention will be explained with reference to drawings.

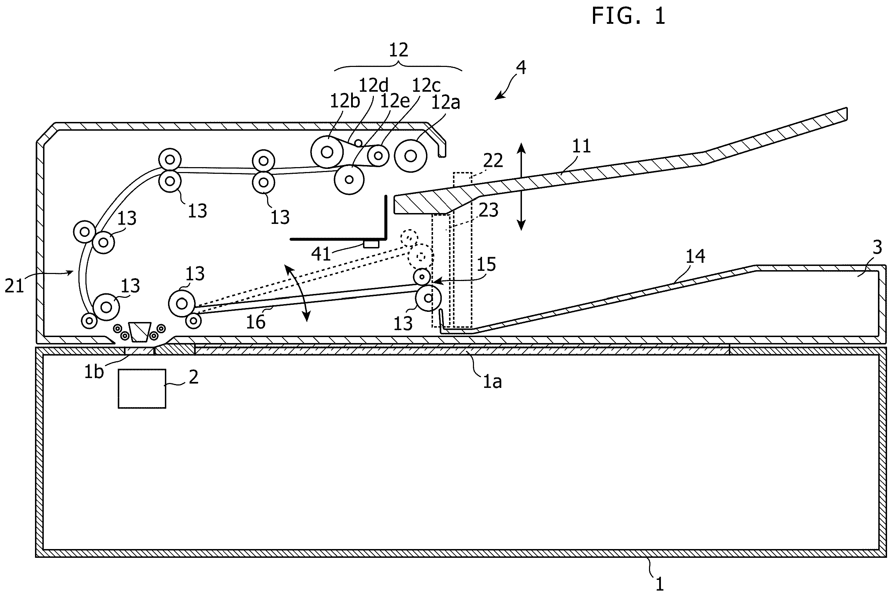

Fig. 1 shows a side view an internal configuration of an image scanning apparatus in the present invention. The image scanning apparatus shown in Fig. 1 is an apparatus such as scanner, copier, facsimile device, or multi function peripheral, and includes an auto document feeder as a document feeding device.

The image scanning apparatus shown in Fig. 1 includes an apparatus main body 1, contact glasses 1a and 1b arranged on an upper surface of the main body 1, an image sensor 2, and a document cover 3.

The contact glass 1a is a transparent member on which a document is put when performing image scanning not using an auto document feeder 4. The contact glass 1b is a transparent member on which a document passes when performing image scanning of a document image while automatically transporting a document using the auto document feeder 4.

The image sensor 2 scans a document image of a document sheet. Specifically, the image sensor 2 is a sensor that optically scans an image of a document sheet that passes at a predetermined position in a transportation path of a document when performing image scanning of a document image while automatically transporting the document using the auto document feeder 4. The image sensor 2 scans the document image line by line. The image sensor 2 include a light source (light emitting diode or the like) and a light receiving element (line sensor or the like), and causes the light source to emit light, and causes the light receiving element to detect reflection light that reflects on a document or the like through the contact glass 1a or 1b and outputs an electric signal corresponding to a light amount of the reflection light. A controller 51 mentioned below receives this electric signal, and generates a document image (i.e. image data of the document image) on the basis of this electric signal.

A document cover 3 is a rotatable member installed so as to be capable of contacting a surface area of the contact glass 1a when it rotates, and presses a document against the contact glass 1a and prevents environmental light from entering through the contact glasses 1a and 1b to the inside of the apparatus during image scanning. Further, the auto document feeder 4 includes a feeding tray 11 on which a document sheet is put, and a transportation device 21 that transports the document sheet from the feeding tray 11 to an output tray 14 through a scanning position of the image sensor 2; and causes a document sheet put on the feeding tray 11 to pass at a position on the contact glass 1b sheet by sheet and output the document sheet onto the output tray 14. Specifically, the transportation device 21 includes a paper feeding unit 12 and transportation rollers 13 arranged along the transportation path, and feeds a document sheet using the paper feeding unit 12 and transports the document sheet using the transportation rollers 13. The paper feeding unit 12 includes a feeding roller 12a, a driving roller 12b, a driven roller 12c, a transportation belt 12d, and an auxiliary roller 12e, and draws a document sheet on the feeding tray 11 into the transportation path along the transportation belt 12d using the feeding roller 12a sheet by sheet.

Further, the image sensor 2 can change an image scanning position using an unshown driving device; and when performing image scanning using the auto document feeder 4, the image scanning position of the image sensor 2 is set as a passing position of a document on the contact glass 1b, and the image sensor 2 optically scans an image of the document in transportation by the auto document feeder 4 when the document passes on the contact glass 1b. Here, the image sensor 2 is a color image sensor, and scans document images of plural colors such as RGB at image scanning positions different from each other along a transportation direction. In this embodiment, a CIS (Contact Image Sensor) is used as the image sensor 2; and when performing image scanning with the auto document feeder 4, the image sensor 2 is arranged right below the contact glass 1b.

The feeding roller 12a, the driving roller 12b and the transportation roller 13 are driven by a driving device (not shown) such as motor.

The output tray 14 is a tray on which piled are document sheets that are outputted and fall through the ejection port 15 at an end of the transportation path. The ejection port 15 outputs a document sheet onto the output tray 14 at the end of the transportation path.

Further, the image scanning apparatus shown in Fig. 1 includes a lifting device 22 that lifts and lowers the feeding tray 11 in accordance with an existing lifting-and-lowering manner, and a lifting device 23 that lifts and lowers the ejection port 15 in accordance with an existing lifting-and-lowering manner. Specifically, the lifting device 23 rotates a termination transportation path 16 with the transportation roller 13 at the end of the transportation path around a predetermined support point as a center of the rotation, and thereby lifts and lowers the ejection port 15.

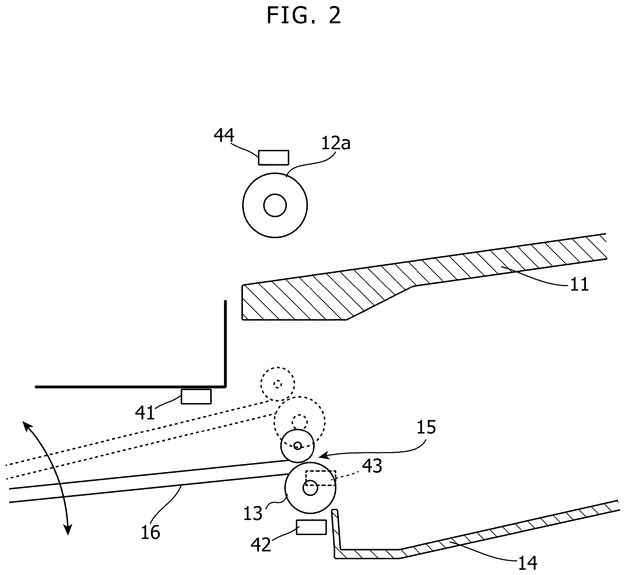

Fig. 2 shows a diagram that explains a sensor installed in the document feeding device 4 shown in Fig. 1. The document feeding device 4 includes an output lift upperlimit sensor 41, an output lift lowerlimit sensor 42, an output-tray sheet amount sensor 43, and a feeding-tray upperlimit sensor 44.

The output lift upperlimit sensor 41 detects that the ejection port 15 reaches a fixed upperlimit height position. Here, the output lift upperlimit sensor 41 is a contact sensor that detects contact with a transportation path 16 in conjunction with the ejection port 15.

The output lift lowerlimit sensor 42 detects that the ejection port 15 reaches a fixed lowerlimit height position.

The output-tray sheet amount sensor 43 detects a sheet amount (a thickness of a sheet bunch) of document sheets on the output tray 14. The output-tray sheet amount sensor 43 is fixed to the ejection port 15 and is lifted and lowered in conjunction with lifting and lowering the ejection port 15.

The feeding-tray upperlimit sensor 44 is a sensor that detects that the feeding tray 11 reaches an upperlimit height. Specifically, the feeding-tray upperlimit sensor 44 detects that the feeding tray 11 or a document sheet put on the feeding tray 11 contacts with the feeding roller 12a.

It should be noted that on a backside of the feeding tray 11, no contact sensors are installed to detect that any object (the ejection port 15, a document sheet on the output tray 14 or the like) contacts with the feeding tray 11.

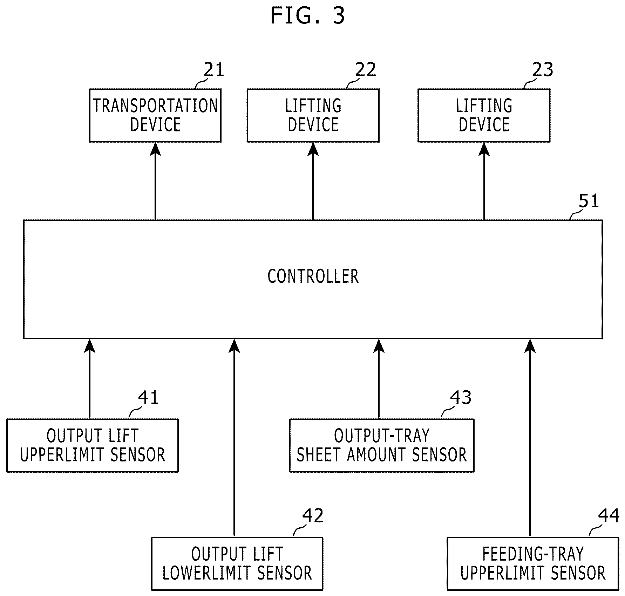

Fig. 3 shows a block diagram that indicates an electronic configuration of the document feeding device 4 shown in Fig. 1. As shown in Fig. 3, the document feeding device 4 further includes a controller 51.

The controller 51 includes a processor that executes a program, an ASIC (Application Specific Integrated Circuit) and/or the like, and controls the auto document feeder 4 (i.e. the transportation device 21, the lifting devices 22, 23 and the like) and thereby performs transportation of a document sheet and performs image scanning using the image sensor 2 and thereby acquires image data of an image of the document sheet (i.e. a document image).

Further, the controller 51 controls the lifting device 22 and thereby changes a height position of the feeding tray 11, and controls the lifting device 23 and thereby changes a height position of the ejection port 15 correspondingly to the sheet amount detected by the output-tray sheet amount sensor 43.

Specifically, the controller 51 changes a height position of the feeding tray 11 such that an upper surface of a sheet bunch of document sheets on the feeding tray 11 contacts with the feeding roller 12a. Further, the controller 51 changes a height position of the ejection port 15 such that a height position of the ejection port 15 agrees with a height position higher by a predetermined height than a height position of an upper surface of a sheet bunch of document sheets on the output tray 14.

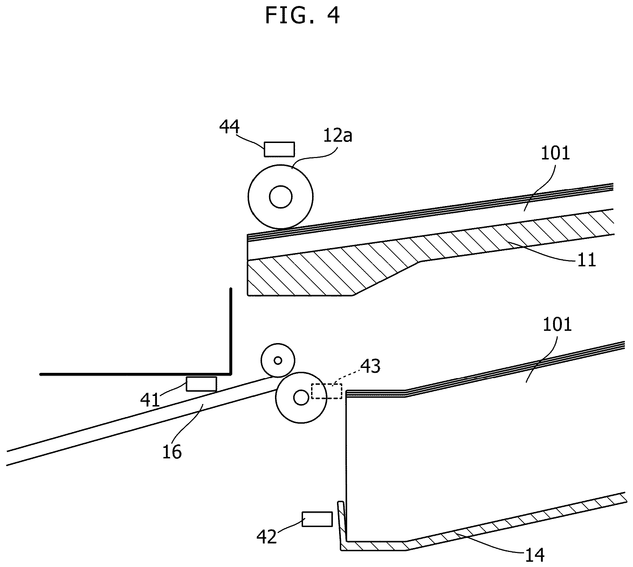

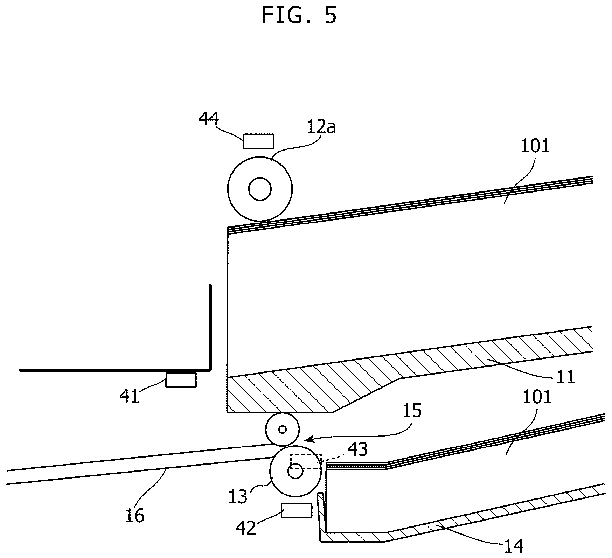

Fig. 4 shows a diagram that explains lifting of the ejection port 15 when there is a small amount of document sheets on the feeding tray 11. Fig. 5 shows a diagram that explains lifting of the ejection port 15 when there is a large amount of document sheets on the feeding tray 11.

Further, as shown in Fig. 4, for example, when the output lift upperlimit sensor 41 detects that the ejection port 15 reaches the aforementioned upperlimit height position, the controller 51 temporarily stops document sheet transportation performed by the transportation device 21 of the document sheet 101 on the output tray 14 until the document sheet 101 is removed.

Furthermore, as shown in Fig. 5, for example, when the controller 51 tries to lift the ejection port 15 using the lifting device 23 to a height position corresponding to a sheet amount of the document sheet 101 on the output tray 14, if a height position of the ejection port 15 does not become the height position corresponding to the aforementioned sheet amount and the output lift upperlimit sensor 41 does not detect that the ejection port 15 reaches the upperlimit height position even though the controller 51 causes the lifting device 23 to operate for predetermined time (i.e. if the ejection port 15 contacts with the feeding tray 11), then the controller 51 temporarily stops document sheet transportation performed by the transportation device 21 of the document sheet 101 on the output tray 14 until the document sheet 101 is removed.

Afterward, when the document sheet 101 on the output tray 14 is removed, the controller 51 automatically resumes the document sheet transportation by the transportation device 21.

Removing the document sheet 101 on the output tray 14 may be detected using the output-tray sheet amount sensor 43 or may be detected using a sensor (not shown) that detects the document sheet 101 on the output tray 14.

Further, in this embodiment, in a case that a current height position of the feeding tray 11 is higher than a predetermined height position, when the controller 51 tries to lift the ejection port 15 using the lifting device 23 to a height position corresponding to the sheet amount on the output tray 14, if a height position of the ejection port 15 does not become the height position corresponding to the sheet amount and the output lift upperlimit sensor 41 does not detect that the ejection port 15 reaches the upperlimit height position even though the controller 51 causes the lifting device 23 to operate for predetermined time, then the controller 51 determines that trouble occurs on the lifting device 23 or the output lift upperlimit sensor 41, performs error notification (service call or the like) and/or error indication and terminates the document sheet transportation due to error.

Furthermore, in this embodiment, in a case that a current height position of the feeding tray 11 is equal to or less than the predetermined height position, when the controller 51 tries to lift the ejection port 15 using the lifting device 23 to a height position corresponding to the sheet amount on the output tray 14, if a height position of the ejection port 15 does not become the height position corresponding to the sheet amount and the output lift upperlimit sensor 41 does not detect that the ejection port 15 reaches the upperlimit height position even though the controller 51 causes the lifting device 23 to operate for predetermined time, then the controller 51 temporarily stops the document sheet transportation performed by the transportation device 21 until the document sheet on the output tray 14 is removed.

Here, the aforementioned predetermined height position is a height position at which the feeding tray 11 contacts with the ejection port 15 when the ejection port 15 reaches the upperlimit height position.

The following part explains a behavior of the aforementioned image scanning apparatus.

When document sheets 101 are put on the feeding tray 11, the controller 51 lifts the feeding tray 11 until the document sheets 101 contact with the feeding roller 12a (i.e. until the feeding-tray upperlimit sensor 44 detects that the feeding tray 11 reaches the upperlimit height position). Subsequently, the controller 51 starts transportation of the document sheets and upon starting the transportation, transports the document sheets on the feeding tray 11 one by one to the output tray 14. In this process, the controller 51 gradually changes a height position of the feeding tray 11 such that the document sheets on the feeding tray 11 contact with the feeding roller 12a while the document sheets on the feeding tray 11 are decreasing, and gradually changes a height position of the ejection port 15 while the document sheets on the output tray 14 are increasing.

Further, as shown in Fig. 4, for example, when the output lift upperlimit sensor 41 detects that the ejection port 15 reaches the aforementioned upperlimit height position, the controller 51 temporarily stops document sheet transportation performed by the transportation device 21 of the document sheets 101 until the document sheets 101 on the output tray 14 are removed. Afterward, when the document sheet 101 on the output tray 14 is removed, the controller 51 automatically resumes the document sheet transportation by the transportation device 21.

Furthermore, as shown in Fig. 5, for example, when the controller 51 tries to lift the ejection port 15 using the lifting device 23 to a height position corresponding to a sheet amount of the document sheet 101 on the output tray 14, if a height position of the ejection port 15 does not become the height position corresponding to the aforementioned sheet amount and the output lift upperlimit sensor 41 does not detect that the ejection port 15 reaches the upperlimit height position even though the controller 51 causes the lifting device 23 to operate for predetermined time, then the controller 51 temporarily stops document sheet transportation performed by the transportation device 21 of the document sheets 101 on the output tray 14 until the document sheets 101 are removed. Afterward, when the document sheet 101 on the output tray 14 is removed, the controller 51 automatically resumes the document sheet transportation by the transportation device 21.

As mentioned, in the aforementioned embodiment, (a) if the output lift upperlimit sensor 41 detects that the ejection port 15 reaches the upperlimit height position, the controller 51 temporarily stops document sheet transportation performed by the transportation device 21 until document sheets on the output tray 14 are removed, and (b) when the controller 51 tries to lift the ejection port 15 using the lifting device 23 to a height position corresponding to the sheet amount on the output tray 14, if a height position of the ejection port 15 does not become the height position corresponding to the sheet amount and the output lift upperlimit sensor 41 does not detect that the ejection port reaches the upperlimit height position even though the controller 51 causes the lifting device 23 to operate for predetermined time, then the controller 51 temporarily stops document sheet transportation performed by the transportation device 21 until document sheets on the output tray 14 are removed.

Consequently, a contact sensor is not required to detect contact of the feeding tray 11 with the ejection port 15, and even if the ejection port 15 contacts with the feeding tray 11, the document sheet transportation is temporarily stopped but automatically resumed, and therefore, a cost of the device is relatively low and usability of the device is high.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. A document feeding device, comprising:
a feeding tray on which a document sheet is put;
an output tray for the document sheet;
a transportation device configured to transport the document sheet along a transportation path from the feeding tray to the output tray;
an ejection port configured to output at an end of the transportation path the document sheet to the output tray;
a first lifting device configured to lift and lower the feeding tray;
a second lifting device configured to lift and lower the ejection port;
an output lift upperlimit sensor configured to detect that the ejection port reaches a fixed upperlimit height position;
an output-tray sheet amount sensor configured to detect a sheet amount of document sheets on the output tray; and
a controller configured to control the first lifting device and thereby change a height position of the feeding tray, and control the second lifting device and thereby change a height position of the ejection port correspondingly to the sheet amount detected by the output-tray sheet amount sensor;
wherein (a) if the output lift upperlimit sensor detects that the ejection port reaches the upperlimit height position, the controller temporarily stops document sheet transportation performed by the transportation device until document sheets on the output tray are removed, and (b) when the controller tries to lift the ejection port using the second lifting device to a height position corresponding to the sheet amount, if a height position of the ejection port does not become the height position corresponding to the sheet amount and the output lift upperlimit sensor does not detect that the ejection port reaches the upperlimit height position even though the controller causes the second lifting device to operate for predetermined time, then the controller temporarily stops document sheet transportation performed by the transportation device until document sheets on the output tray are removed.

2. The document feeding device according to claim 1, wherein when the document sheets on the output tray are removed, the controller automatically resumes the document sheet transportation.

3. The document feeding device according to claim 1, wherein (a) in a case that a current height position of the feeding tray is higher than a predetermined height position, when the controller tries to lift the ejection port using the second lifting device to a height position corresponding to the sheet amount, if a height position of the ejection port does not become the height position corresponding to the sheet amount and the output lift upperlimit sensor does not detect that the ejection port reaches the upperlimit height position even though the controller causes the second lifting device to operate for predetermined time, then the controller determines that trouble occurs on the second lifting device or the output lift upperlimit sensor; and
(b) in a case that a current height position of the feeding tray is equal to or less than the predetermined height position, when the controller tries to lift the ejection port using the second lifting device to a height position corresponding to the sheet amount, if a height position of the ejection port does not become the height position corresponding to the sheet amount and the output lift upperlimit sensor does not detect that the ejection port reaches the upperlimit height position even though the controller causes the second lifting device to operate for predetermined time, then the controller temporarily stops the document sheet transportation performed by the transportation device until document sheets on the output tray are removed.

4. The document feeding device according to claim 3, wherein the predetermined height position is a height position at which the feeding tray contacts with the ejection port when the ejection port reaches the upperlimit height position.

5. An image scanning apparatus, comprising:
a document feeding device according to any of claims 1 to 4; and
an image sensor configured to scan an image of the document sheet at a predetermined position in the transportation path.
